# FASCICULE DE BREVET EUROPEEN

(11) **EP 1 263 196 B1**
(45) Date de publication et mention de la délivrance du brevet: **29.09.2004**
(21) Numéro de dépôt: 02447097.3
(22) Date de dépôt: 28.05.2002
(51) Int. Cl.: H04M 1/247, A61F 4/00

(54) **Dispositif téléphonique pour moins valides**
Telefongerät für Körperbehinderte
Telephone device for disabled people

(30) Priorité: 29.05.2001 BE 200100363
(43) Date de publication de la demande: 04.12.2002
(73) Titulaire: Joye, Jean, 4500 Huy (BE); Perin, Fernand, 4450 Juprelle (BE)
(72) Inventeur: Joye, Jean, 4500 Huy (BE); Perin, Fernand, 4450 Juprelle (BE)
(74) Mandataire: Van Malderen, Michel

(56) Documents cités:
- FR-A- 1 599 158
- GB-A- 2 064 221
- US-A- 4 903 291
- US-A- 5 095 503
- US-B1- 6 223 058

## Description

### Objet de l'invention

La présente invention se rapporte à un dispositif de communication téléphonique destiné à faciliter l'usage du téléphone aux personnes non voyantes ou à dextérité manuelle réduite.

### Etat de la technique

La plupart des systèmes téléphoniques pour personnes moins valides sont basés sur l'agrandissement des fonctions ou des touches de sélection. Ces systèmes restent néanmoins inaccessibles aux personnes réellement moins valides ou à dextérité réduite. Même les téléphones portables à reconnaissance vocale sont en réalité trop complexes à utiliser pour certaines catégories de personnes.

Le document GB 2064221 A divulgue un système avec une manette centrale permettant une transmission digitale. Ce système n'est cependant pas associé à une quelconque technologie vocale et pratiquement impossible à utiliser par des non voyants.

D'autres systèmes comme des claviers électroniques actionnables à une seule main avec des touches agrandies sont proposés comme par exemple dans le document EP 0213022 B1. Ceux-ci présentent à nouveau l'inconvénient d'être difficilement utilisable pour les non voyants.

Le document US-B1-6,223,058 décrit un téléphone comprenant un « jog dial » permettant d'exercer un mouvement de rotation et un mouvement de pression radiale pour sélectionner des correspondants. La rotation permet de déplacer un curseur dans une liste de noms affichés sur un écran et la pression permet d'afficher le numéro correspondant au nom et d'initier l'appel. Le « jog dial » divulgué dans ce document est néanmoins difficilement utilisable par une personne handicapée. La dextérité nécessaire à la manipulation du « jog-dial » fait généralement défaut dans la plupart des handicaps et, l'absence d'aide-mémoire vocal le rend inutilisable aux non-voyants. De plus, il ne permet pas le préenregistrement sans l'aide du clavier, ce qui rend l'utilisateur dépendant d'une personne valide alors que l'autonomie est un avantage essentiel de la présente invention.

Le document US-A-5,095,503 décrit un GSM pour voiture avec une fonction mains-libres. Un répertoire peut être parcouru à l'aide d'une touche et un synthétiseur vocal indique de manière audible le numéro d'entrée dans le répertoire ainsi que le numéro de téléphone ou le nom du correspondant. Ce système permet de produire des sons prédéfinis tels que des mots connus à l'avance comme « location », « message d'erreur », « on », « off » et les chiffres 0 à 9. Ce document ne décrit cependant pas explicitement une mémoire dans laquelle on pourrait enregistrer les noms des correspondants. Il ne s'agit donc pas véritablement d'une mémoire vocale au sens où elle est définie dans la présente invention mais plutôt d'un synthétiseur vocal capable de produire des sons.

L'indication vocale du correspondant sélectionné ne se fait donc pas sur la base de son nom que l'utilisateur aura choisi et préenregistré vocalement par l'intermédiaire d'un micro, mais sur la base des lettres ou des chiffres introduit(e)s au clavier.

Le document US-A-4,903,291 décrit un dispositif détecteur de silence pour téléphone qui coupe la communication en cas de silence prolongé.

### Buts de l'invention

La présente invention vise à fournir un dispositif de communication téléphonique simple, aisément manipulable par toutes les personnes dont la vue est altérée ou des personnes à dextérité réduite. Le dispositif ne nécessite aucune lecture visuelle ou tactile de chiffre ou de lettre, la sélection se faisant à l'ouïe par l'intermédiaire de mémoires vocales actionnées par une manette unique. Cette même manette remplacant en outre intégralement le clavier numérique.

### Résumé de l'invention

La présente invention présente un dispositif de communication téléphonique comprenant une partie électronique et un sélecteur électromécanique associé, ledit sélecteur électromécanique comprend une manette par laquelle on exerce un mouvement de rotation, de pression ou de traction commandant la recherche, l'identification vocale puis la prise de ligne et l'appel automatique subséquent d'un correspondant ou la prise d'un appel entrant, et ladite partie électronique comprend une mémoire numérique et une mémoire vocale, comprenant chacune un répertoire à plusieurs registres où sont préenregistrés dans l'une des numéros d'appel et dans l'autre des noms de destinataires correspondants capables d'être recherchés par la rotation puis validés et activés par traction/pression de ladite manette.

Un autre élément de la présente invention est le fait que ladite partie électronique comprend les circuits de sonnerie, de prise et de coupure de ligne nécessaires à la réalisation d'une communication téléphonique en "main-libre".

Par ailleurs ladite manette permet également la prise de ligne et la composition manuelle d'un numéro non compris dans la mémoire numérique ou l'introduction d'un numéro nouveau dans ladite mémoire lorsque le bouton sélecteur manuel/automatique est dans la position autorisant l'usage en manuel.

La présente invention précise également que la partie électronique comprend un inhibiteur de numérotation qui permet la prise d'un appel entrant sans activer la mémoire numérique même si le sélecteur manuel/automatique est en position automatique.

Un autre aspect de la présente invention montre que ladite partie électronique comprend un détecteur de silence qui coupe automatiquement la communication si un niveau sonore inférieur à un seuil réglable persiste au delà d'un temps prédéfini.

La présente invention précise également. la constitution du dispositif selon la revendication 1, caractérisé en ce que ledit sélecteur électromécanique comprend un sélecteur rotatif solidaire de ladite manette par l'intermédiaire d'un axe coulissant à travers une buselure et au moins un ressort définissant une position neutre entre deux butées matérialisées chacune par un microswitch envoyant une impulsion chaque fois qu'il est atteint par une plaque anti-rotation solidaire dudit sélecteur rotatif.

Avantageusement selon l'invention, tous les dispositifs de l'invention se trouvent réunis au sein d'un même boîtier.

D'autres caractéristiques et avantages de l'invention seront décrits dans la description d'une forme d'exécution préférée qui suit.

### Brève description des figures

La figure 1 représente la manette ou poignée du dispositif de communication téléphonique en coupe et en vue arrière.

La figure 2 représente le schéma de fonctionnement de l'interface électronique de l'invention.

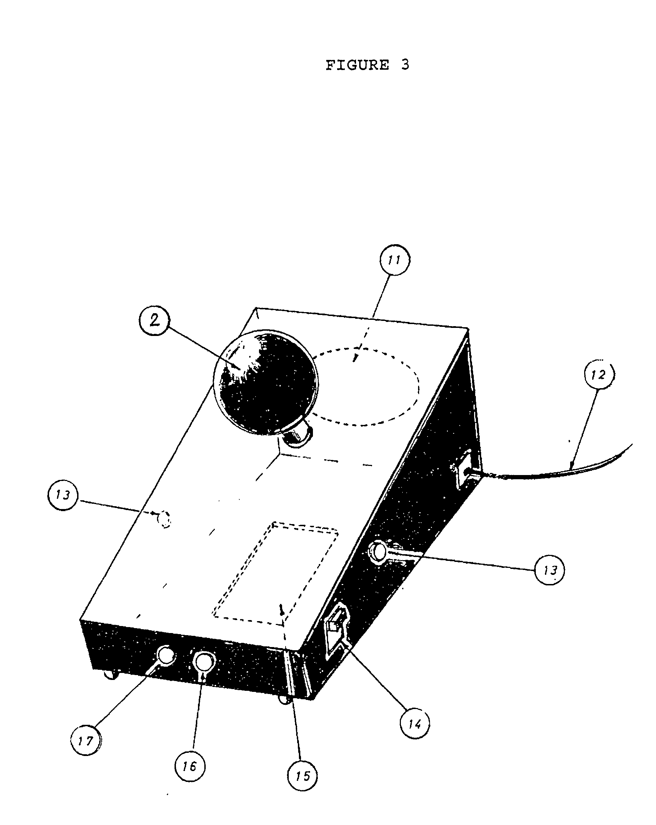

La figure 3 représente le boîtier réunissant les fonctions décrites dans les deux figures précédentes.

### Description détaillée de l'invention

L'objet de la présente invention est un dispositif de communication téléphonique rendant accessible toutes les fonctions d'un téléphone à mémoire classique aux personnes non voyantes et/ou à dextérité manuelle réduite par l'intermédiaire d'une manette unique.

Le système remplace toutes les fonctions classiques d'un clavier à touches nécessaires à l'établissement et à la réception de communications téléphoniques avec des correspondants, dont les numéros sont préalablement enregistrés par l'utilisateur ou une autre personne dans la mémoire dudit dispositif. Il rend par ailleurs accessible tous les autres services offerts par les compagnies de télécommunication modernes.

La manette, qui constitue une caractéristique essentielle de la présente invention, permet en outre d'actionner un aide mémoire vocal où sont préenregistrés les noms des destinataires par l'utilisateur ce qui permet d'identifier celui-ci à l'ouïe avant l'exécution de l'appel afin d'assurer à l'utilisateur que le numéro souhaité coïncide avec celui qui sera formé par le dispositif de la présente invention.

Le dispositif de communication téléphonique comprend un système électromécanique permettant d'effectuer trois mouvements par la seule manipulation de ladite manette. Il s'agit de mouvements de rotation, de pression ou de traction.

La rotation permet de sélectionner un cran adressant simultanément un registre de la mémoire vocale et un registre coïncidant de la mémoire numérique.

Par une pression brève, on actionne une mémoire vocale préalablement enregistrée par l'utilisateur au nom de l'abonné correspondant. Si l'audition de son nom confirme le choix de l'utilisateur, on passe à l'étape suivante qui est la prise de ligne suivie de l'appel dudit correspondant. Ladite prise de ligne et la numérotation consécutive sont déclenchées par une simple traction brève sur la même manette.

En cas d'appel entrant, qui fait retentir une sonnerie, une traction brève sur la manette permet également de prendre la ligne sans provoquer de numérotation intempestive grâce à un inhibiteur de numérotation qui est activé en cas de sonnerie

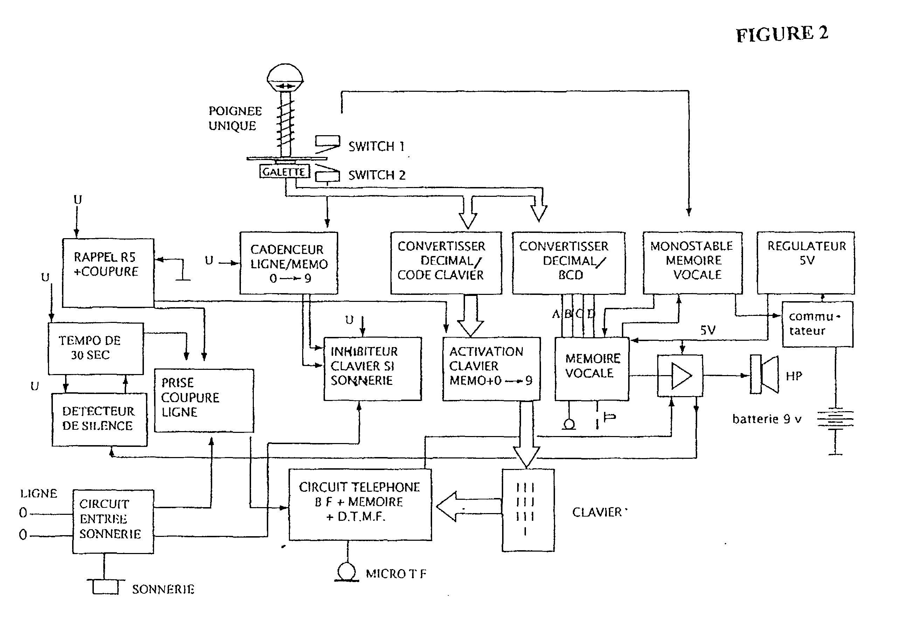

En cas de signal d'occupation, l'usager est loisible d'activer le rappel automatique R5 (voir Figure 2) en exerçant une traction sur la commande préalablement placée en une position prédéfinie et à ce titre, le premier registre de la mémoire vocale peut ne pas être chargée par un nom d'abonné mais par la phrase : « rappel automatique » ou équivalent. Un bouton auxiliaire peut aussi remplir cette fonction.

En outre, la présente invention propose une interface assurant la liaison entre la manette décrite ci-dessus et la carte téléphonique d'un téléphone à mémoire. Le modèle de téléphone est préférentiellement de type main libre pour des raisons évidentes.

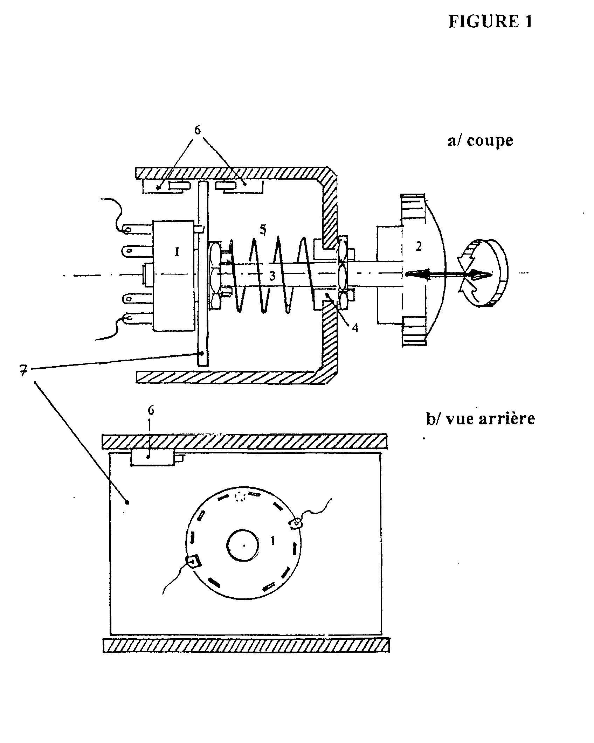

Les différents constituants mécaniques de la manette sur le dispositif de la présente invention sont visibles sur la figure 1. Elle comprend une galette de sélecteur rotatif 1 qui est solitaire de la manette 2. Son axe 3 coulisse à travers une buselure 4 permettant outre sa rotation, son enfoncement ou son extraction par rapport à un point neutre défini par un ressort 5 qui se comprime ou se déprime selon le mouvement souhaité. Les butées inférieures et supérieures sont matérialisées par deux microswitch 6 qui envoient une impulsion vers l'interface chaque fois qu'ils sont atteints par la plaque anti-rotation.

Chaque plot du sélecteur rotatif est relié électriquement à une interface électronique qui réalise la conversion des impulsions produites par le sélecteur électromécanique décrit ci-dessus en fermeture des contacts des touches adéquates du clavier de la platine téléphonique. Un circuit adéquat est utilisé pour convertir au code décimal chacune des touches de numérotation de 0 à 9 ainsi que pour la touche « mémo ». Ce circuit assure également la prise de ligne ainsi que le rappel automatique de la ligne occupée si les impulsions de commande issues de la manette donnent l'ordre en présence du signal d'occupation (traction en position 1).

Le cadencement des contacts est réalisé dans l'ordre suivant :
a) prise de ligne
b) activation de la touche « mémo »
c) activation du numéro de l'abonné sélectionné

Le stockage en mémoire vocale de l'identité de chaque appelé et la restitution du nom par action sur la manette (pression) sont également réalisés par ce dispositif.

Le dispositif de communication téléphonique selon la présente invention comprend en outre un circuit à mémoire vocale commandé par ladite manette, tant pour la sélection (rotation) que pour l'activation (pression ou traction). Un micro séparé 17 ainsi qu'un bouton poussoir d'enregistrement préalable 13 sécurisé par une redondance participent à l'enregistrement préalable du répertoire vocal.

Le clavier classique qui présente une des possibilités pour la présélection et l'enregistrement vocal ou pour un usage traditionnel 15 est accessible par une autre face du dispositif mais dissimulé pour ne pas altérer la vocation de simplicité du système. Par ailleurs, une coupure automatique de la ligne en cas de silence persistant par exemple pendant plus de 30 secondes est assurée.

Toutes les fonctions décrites dans la présente invention sont réunies dans un boîtier qui a environ la taille d'un téléphone fixe classique et dont toutes les particularités sont décrites dans la légende.

### Légende

- **1**: sélecteur rotatif
- **2**: manette ou poignée à triple mouvement : rotation, pression, traction
- **3**: axe reliant le sélecteur rotatif à la manette
- **4**: buselure
- **5**: ressort
- **6**: microswitch
- **7**: plaque anti-rotation
- **11**: haut parleur du système main-libre
- **12**: raccordement téléphonique
- **13**: boutons-poussoirs sécurisés pour enregistrement
- **14**: sélecteur manuel/automatique
- **15**: clavier numérique accessible par le dessous pour présélection
- **16**: micro téléphonique du système main-libre
- **17**: micro pour enregistrement de la mémoire vocale

## Revendications

1. Dispositif de communication téléphonique pour personnes non voyantes ou à dextérité manuelle réduite comprenant une partie électronique avec une mémoire numérique à plusieurs registres dans laquelle sont préenregistrés les numéros d'appel et un sélecteur électromécanique associé comprenant un sélecteur rotatif (1),
**caractérisé en ce que** :
- ledit sélecteur électromécanique comprend en outre une manette (2) solidaire dudit sélecteur rotatif (1) permettant d'exercer un mouvement de rotation, de pression ou de traction ;
- ladite partie électronique comprend un aide-mémoire vocal, comprenant un répertoire à plusieurs registres où l'utilisateur préenregistre par l'intermédiaire d'un micro(17) des noms de destinataires correspondants aux numéros d'appel préenregistrés ;
- ledit dispositif de communication téléphonique comprend en outre un sélecteur manuel/automatique (14)
- lesdits correspondants sont capables d'être recherchés par la rotation et identifiées par l'ouïe puis validés et activés par traction/pression de ladite manette (2) lorsque le sélecteur manuel/automatique (14) est dans la position autorisant l'usage en automatique ;
- ladite manette permet également la prise de ligne et la composition manuelle d'un numéro non compris dans la mémoire numérique ou l'introduction d'un numéro nouveau dans ladite mémoire lorsque le sélecteur manuel/automatique (14) est dans la position autorisant l'usage en manuel.

2. Dispositif selon la revendication 1, **caractérisé en ce que** ladite partie électronique comprend les circuits de sonnerie, de prise et de coupure de ligne nécessaires à la réalisation d'une communication téléphonique en "main-libre".

3. Dispositif selon la revendication 1, **caractérisé en ce que** la partie électronique comprend un inhibiteur de numérotation qui permet la prise d'un appel entrant sans activer la mémoire numérique même si le sélecteur manuel/automatique (14) est en position automatique.

4. Dispositif selon la revendication 1, **caractérisé en ce que** ladite partie électronique comprend un détecteur de silence qui coupe automatiquement la communication si un niveau sonore inférieur à un seuil réglable persiste au-delà d'un temps prédéfini.

5. Dispositif selon la revendication 1, **caractérisé en ce que** ledit sélecteur électromécanique comprend un sélecteur rotatif (1) solidaire de ladite manette (2) par l'intermédiaire d'un axe (3) coulissant à travers une buselure (4) et au moins un ressort (5) définissant une position neutre entre deux butées matérialisées chacune par un microswitch (6) envoyant une impulsion chaque fois qu'il est atteint par une plaque anti-rotation (7) solidaire dudit sélecteur rotatif (1).

6. Dispositif selon l'une quelconque des revendications précédentes, **caractérisé en ce que** l'ensemble des fonctions décrites dans les revendications 1 à 6 se trouve réuni au sein d'un même boîtier.

7. Utilisation du dispositif selon l'une quelconque des revendications précédentes pour faciliter les communications téléphoniques pour personnes moins valides et notamment mal ou non voyantes, la sélection se faisant à l'ouïe.

## Claims

1. Telephone communication device for the blind or for people with reduced manual dexterity comprising an electronic part with a digital memory with several registers in which the numbers to be dialled are pre-recorded and an associated electromechanical selector comprising a rotary selector (1), **characterised in that**:
- said electromechanical selector also includes a joystick (2) fixed to said rotary selector (1) so as to allow movements of rotation, pressure or traction;
- said electronic part comprises a vocal memory aid comprising a directory with several registers where the user, by means of a microphone (17), can pre-record the names of contacts corresponding to the pre-recorded phone numbers;
- said telephone communication device furthermore comprises a manual/automatic switch (14);
- said contacts can be found by a movement of rotation and identified by hearing, then confirmed and activated by traction/pressure on said joystick (2) when the manual/automatic switch (14) is in the position that allows its use in automatic mode;
- said joystick also allows to open a telephone line and to manually dial a number that is not included in the digital memory or to introduce a new number into said memory when the manual/automatic switch (14) is in the position that allows its use in manual mode.

2. Device as in Claim 1, **characterised in that** said electronic part comprises the circuits for ringtones and for opening and closing lines required in order to make "hands-free" phone calls.

3. Device as in Claim 1, **characterised in that** the electronic part comprises a "dial-block" that allows to take an incoming call without activating the digital memory even if the manual/automatic switch (14) is in the automatic position.

4. Device as in Claim 1, **characterised in that** said electronic part comprises a silence detector which automatically cuts off the call if a sound level below an adjustable level lingers longer than a pre-defined time.

5. Device as in Claim 1, **characterised in that** said electromechanical selector comprises a rotary selector (1) fixed to said joystick (2) by means of a shaft (3) that slides through a bush (4) and at least one spring (5) that defines a neutral position between two stops, each formed by a microswitch (6) that sends an impulse each time it is touched by an anti-rotation plate (7) fixed to said rotary selector (1).

6. Device as in any one of the preceding claims, **characterised in that** the set of functions described in Claims 1 to 6 can be found inside one single box.

7. Use of the device as in any one of the preceding claims in order to simplify telephone communications for disabled people and in particular for the blind or visually-impaired people, the selection being made by hearing.

## Patentansprüche

1. Telefonkommunikationsvorrichtung für Blinde oder Personen mit eingeschränkter Fingerbeweglichkeit, die einen elektronischen Teil mit einem Digitalspeicher mit mehreren Registern umfasst, in dem Rufnummern vorab gespeichert werden, und eine damit verbundene elektromechanische Wahlvorrichtung, die eine Drehwahlscheibe (1) umfasst, **dadurch gekennzeichnet, dass**:
- die besagte elektromechanische Wahlvorrichtung außerdem einen Bedienhebel (2) umfasst, der mit der besagten Wahlscheibe (1) verbunden ist, und eine Dreh-, Druck- oder Zugbewegung ermöglicht;
- der besagte elektronische Teil ein elektronisches Voice-Notizbuch umfasst, das aus einem Verzeichnis mit mehreren Registern besteht, in das der Nutzer mittels eines Mikrofons (17) vorab Namen von Teilnehmern speichert, die vorab gespeicherten Rufnummern zugeordnet sind,
- die besagte Telefonkommunikationsvorrichtung außerdem einen Wahlschalter für manuellen bzw. automatischen Betrieb (14) umfasst,
- die besagten Teilnehmer durch Drehen des besagten Hebels (2) gesucht, mit dem Gehör identifiziert und durch Zug/Druckbetätigung des besagten Hebels (2) freigegeben und angewählt werden können, wenn sich der Manuell-/Automatik-Wahlschalter (14) in der Stellung befindet, die den Automatikbetrieb zulässt,
- der besagte Bedienhebel ebenfalls die Amtsholung und das manuelle Wählen einer nicht im Digitalspeicher enthaltenen Rufnummer oder die Eingabe einer neuen Rufnummer in diesen Speicher ermöglicht, wenn sich der Manuell/Automatik-Wahlschalter (14) in der Stellung befindet, die den manuellen Betrieb zulässt.

2. Vorrichtung nach Anspruch 1, **dadurch gekennzeichnet, dass** der besagte elektronische Teil die Stromkreise für Tonruf, Amtsholung und Gesprächsbeendigung enthält, die zum Durchführen einer Telefonverbindung im "Freisprechbetrieb" erforderlich sind.

3. Vorrichtung nach Anspruch 1, **dadurch gekennzeichnet, dass** der besagte elektronische Teil eine Wählsperre umfasst, die die Annahme eines eingehenden Anrufs ermöglicht, ohne den Digitalspeicher zu aktivieren, selbst wenn sich der Manuell-/Automatik-Wahlschalter (14) in der Automatikstellung befindet.

4. Vorrichtung nach Anspruch 1, **dadurch gekennzeichnet, dass** der besagte elektronische Teil einen Stummdetektor umfasst, der die Verbindung automatisch beendet, wenn der Schallpegel länger als für eine vorab festgelegte Dauer unter einer einstellbaren Schwelle bleibt.

5. Vorrichtung nach Anspruch 1, **dadurch gekennzeichnet, dass** die besagte elektromechanische Wahlvorrichtung eine Drehwahlscheibe (1) umfasst, die mit dem besagten Bedienhebel (2) über eine Achse (3) verbunden ist, die beweglich durch eine Buchse (4) geführt ist, und wenigstens eine Feder (5), durch die eine neutrale Stellung zwischen den beiden Anschlägen festgelegt ist, wobei die Anschläge jeweils in einem Mikroschalter (6) bestehen, der jedes Mal, wenn er von einer Drehsperrplatte (7), die mit der besagten Wahlscheibe (1) verbunden ist, erreicht wird, einen Impuls aussendet.

6. Vorrichtung nach einem der vorhergehenden Ansprüche, **dadurch gekennzeichnet, dass** alle in den Ansprüchen 1 bis 6 beschriebenen Funktionen in einem einzigen Gehäuse vereint sind.

7. Verwendung der Vorrichtung nach einem der vorhergehenden Ansprüche, um Telefonverbindungen für Personen mit Behinderungen, insbesondere Personen mit schlechtem Sehvermögen oder Blinde zu erleichtern, da die Wahl nach Gehör stattfindet.
